# EUROPEAN PATENT APPLICATION

(11) **EP 1 321 038 A1**
(43) Date of publication of application: **25.06.2003**
(21) Application number: 02028383.4
(22) Date of filing: 18.12.2002
(51) Int. Cl.: A01M 27/00

(54) **Device for the elimination of burrowing rodents such as moles, gophers and the like**

(30) Priority: 21.12.2001 IT PN20010092
(71) Applicant: Fedrigo, Ivo, 33070 Vigonovo di Fontanafredda (PN) (IT); Dahl, Christopher E., 33081 Aviano (PN) (IT)
(72) Inventor: Fedrigo, Ivo, 33070 Vigonovo di Fontanafredda (PN) (IT); Dahl, Christopher E., 33081 Aviano (PN) (IT)
(74) Representative: Gustorf, Gerhard, Dipl.-Ing.

(57) **Abstract**

A device for the elimination of moles and other harmful animals comprises elastic means (21), which is able to trigger an explosive charge (16) sufficient for the elimination of the rodents, said device being adapted to be applied on to a structure positioned in correspondence of the tunnel of the tunnel runs of such animals; said spring mechanism (21) operates in conjunction with explosive activating devices (7,5,18,15,21) of a cartridge (16) as to trigger an explosive process of said cartridge (16) for the elimination of the animals thanks to the shock wave generated from the explosion.

## Description

The present invention relates to a device for the elimination of moles and other harmful animals of similar size and behaviour, comprising elastic means, which is able to trigger an explosive charge sufficient for the elimination of the rodents, said device being adapted to be applied on to a structure positioned in correspondence of the tunnel runs of such animals.

It is known that one of most dangerous animals, is the mole, which causes considerable damages in gardens, cultivations, fields and lawns, due to the numerous runs which it creates underground.

These runs disturb the roots system of crops and plants and open at the surface of the soil in the form of hillocks, which are also harmful to crops and, in the case of meadows, make it troublesome to mow the grass.

Effective control of these animals has proven to be difficult, since they remain underground during the day and sometimes exit their tunnels only at night. Their presence however is detected by the hillocks at the end of the tunnels and destabilization of soil.

They are very shy and in case of danger they escape though the underground runs they build. Even if unable to see, they have good hearing and a refined sense of smell, which protect them in several dangerous situations.

To capture and eliminate them is not an easy task.

Prior invented devices utilized carbide explosion inside the animals' subterranean tunnels runs; however, such method is rather complex. Other devices utilize trigger apparatus which, when inserted in the underground burrow system, will kill the animal every time the animal approaches to it. In reality they are rather delicate devices to use and to position, for which it can be said that the moles up to now represent a practically irresolvable problem for meadows, fields, gardens, cultivated areas, etc.

The problem that the device according to the present invention intends to solve relates non only to the elimination of the moles and similar burrowing rodents from meadows, fields, gardens, cultivated areas, but also aims at the total extermination without mutilation for the animals and safe for the operator, as well as economic and ecological, avoiding to pollute the soil with poisonous substances or other substances dangerous for children, or for other animals present in the area (domestic animal or poultry).

This problem is solved by the device according to the present invention, which is characterized by the fact that said spring elements operate in conjunction with explosive devices of a cartridge, in such a way to trigger an explosive process of said cartridge for the elimination of the animals.

These and other characteristics will be clearly explained with the following description and in the attached drawings:
Fig. 1 is a side view of the present invention in operating position;
Fig. 2 is a side view of the apparatus in Fig. 1 in resting position;
Fig. 3 is a front view of the apparatus in Fig. 2;
Fig. 4 is a utilization scheme of the instant invention shown in position in a mole run.

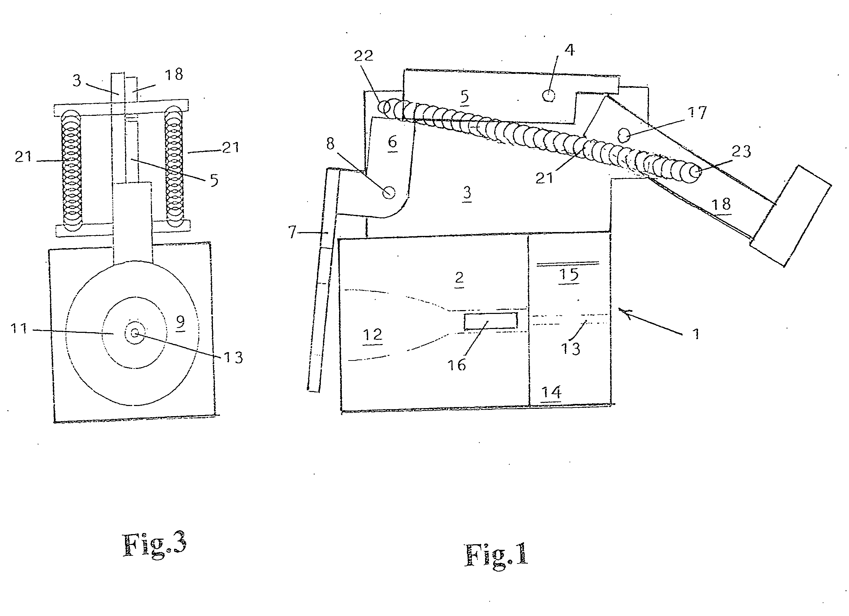

The apparatus of the present invention comprises a main body 1 (Figs 1,2) composed of a base 2 and a superior plate 3, on which an element 5 is hinged in 4 and is able to operate in association with a shoulder 6 of a sensor 7. This one is hinged in 8 and is in the rest position illustrated in Fig. 2, while, as it will be explained later on, its operating position is illustrated in Fig. 1. Sensor 7 is made of a circular portion 9 in Fig. 3, which presents an opening 11 just aligned with a funnel-shape chamber 12 of the base 2, opening that prolonged until corresponding to a small passage 13 obtained in a block 14 destined to be sealed or screwed on to base 2, as will be explained with more details later on. Such passage 13 is adapted to receive a pin 15, which is usually provided adherent in a manner known per se, to block 14. Pin 15 shall be inserted in passage 13 and constitutes the percussion pin of a cartridge 16, blank, positioned in the narrow part of the funnel 12.

A hammer-lever 18 is hinged at 17 to plate 3, which shall hit percussion pin 15 inserted in passage 13. The hammer-lever represents the element called «hammer» (or «dog») in firing weapons and is subject to the action of two springs 21 (Fig.2) each of which is anchored to two pivots, respectively 22,23, the first being fastened to plate 3 and the second to hammer 18. Sensor 7, lever 5, hammer 18, percussion pin 15 and springs 21 constitute the activating devices of cartridge 16.

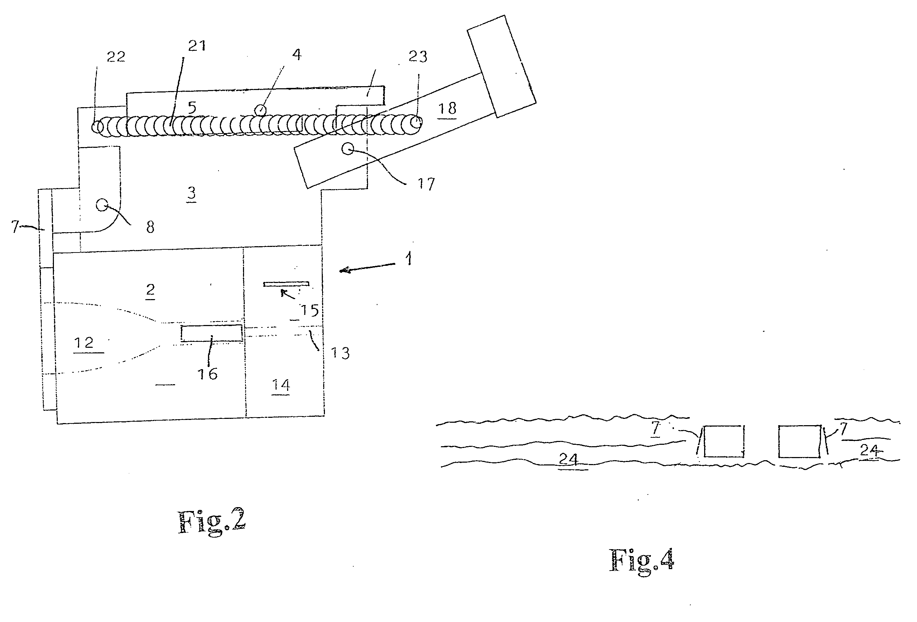

As it will be explained later on, at least two devices object of the present invention will be inserted in the mole run 24 (Fig.4).

The device object of the present invention operates as follows:
a) the device according to the invention can be marketed in the «disposable» version, which means complete with all means necessary for its functionality and usable one single time only. In such case the block 14 is secured, (for example sealed and or glued) to the base 2 and the cartridge 16 is lodged in the throttling of funnel 11. In this version, the apparatus object of the present invention can be realized, as an example, in plastic material so as to render possible its production at low cost and containing the selling price between .1-2;
b) in the hypothesis, instead, in which it is foreseen that the same apparatus must resist to a plurality of uses, the device can be constructed as a rechargeable version, meaning it can be made of metal (aluminium, etc.) or high density plastic and, moreover, the block 14 can be made mountable and dismountable from the base itself by means of screws. The same device can be marketed complete with a series of cartridges 16 and percussion pin 15. Cartridges can be arranged, one at the time, in the throttling of funnel 12, after taking apart block 14 from base 2, this in order to make it possible to load the device every turn. Such rechargeable version, instead of the disposable one, might turn out more interesting, in some cases, from a point of view of operating costs for an extended area, for a garden of remarkable dimensions, or for other reasons;
c) in hypothesis a) and b), the device according to the invention must pass from the configuration of Fig. 2 to that one of Fig. 1. Such operation of «recharge» of the device (that is the change from the resting position of Fig. 2 to the operating position of Fig.1) can be obtained by turning clockwise sensor 7 (Fig.3) to the extent sufficient to allow element 5 to overlie with its left extremity on the support 6 of sensor 7; in such position, that is holding the left end of element 5 to contact with support 6 of sensor 7, hammer 18 is rotated clockwise until it is blocked from an extension 26 of element 5, under the action of springs 21; in this position the device is operative;
d) at this point, two of the devices object of the present invention, charged in accordance with the design in Fig. 1 and after digging in correspondence of a mole run 24, easy to detect thanks to the earth mounds formed by the moles in the tracts of the underground galleries, are positioned in the mole run, as in Fig. 4, one opposite to the other with their sensors facing towards the outside. It is not possible, in fact, to know from which part (right or left) the animal will arrive. The two devices are covered with a little soil, mainly in correspondence with the sensors 7, just enough to cover the uncovered part and practically leaving the devices open to the light. As soon as the mole realizes that a foreign object has interrupted the tunnel, it will approach pushing a plug of soil in front of sensor 7, which will trigger the ignition mechanism, i.e. the explosion means (7,5,18,15,21) of a deflagrating charge of cartridge 16. This, as said earlier, is charged with blanks and, therefore, when the ignition happens, it creates a shock wave which instantaneously kills the animal without mutilation.

As already said, the device according to the present invention does not involve any danger either to the user or to the environment and at the same time is very easy to operate, has a low purchase cost and is easy to manage if the rechargeable option is chosen.

## Claims

1. Device for the elimination of moles and other harmful animals of similar size and behaviour, comprising elastic means (21) which is able to trigger an explosive charge sufficient for the elimination of the rodents, said device being adapted to be applied on to a structure positioned in correspondence of the tunnel runs of such animals, **characterized by** the fact that said spring mechanism operate in conjunction with explosive device means (7, 5, 18, 15, 21) of a cartridge (16), in such way to trigger an explosive process of said cartridge (16) for the elimination of the animals thanks to the shock wave generated from the explosion.

2. Device according to Claim 1, **characterized in that** it comprises a main body (1) composed of a base (2) and a superior plate (3), a sensor (7) being able to activate the explosion of deflagrating explosive charges of the cartridge (16).

3. Device according to Claims 1,2, **characterized in that** the explosive device means comprise a sensor (7), an element (5) hinged in (4) and able to operate in association with a shoulder (6) of a sensor (7), a hammer lever (18), a pin (15), which is usually provided adherent to a block (14) and two springs (21) adapted to control the hammer-lever (18).

4. Device according to Claims 1,2,3, **characterized in that** it can be constructed in a disposable version or in a rechargeable version, based on the various requirements to satisfy from a point of view of operating costs for an extended area, for a garden of remarkable dimensions, or for other reasons.
